# EUROPEAN PATENT SPECIFICATION

(11) **EP 3 226 469 B1**
(45) Date of publication and mention of the grant of the patent: **31.07.2019**
(21) Application number: 15905697.7
(22) Date of filing: 10.10.2015
(51) Int. Cl.: H04L 12/24, H04B 10/272

(54) **METHOD AND DEVICE FOR UPGRADING MULTI-DWELLING UNITS IN OPTICAL NETWORKS**
VERFAHREN UND VORRICHTUNGEN ZUR AUFRÜSTUNG VON MULTI-DWELLING EINHEITEN IN OPTISCHEN NETZWERKEN
PROCÉDÉ ET DISPOSITIF POUR LA MISE À NIVEAU D'UNITÉS MULTI-DWELLING DANS DES RÉSEAUX OPTIQUES

(43) Date of publication of application: 04.10.2017
(73) Proprietor: Huawei Technologies Co., Ltd., Longgang Shenzhen, Guangdong 518129 (CN)
(72) Inventor: LIU, Yue, Shenzhen Guangdong 518129 (CN); YU, Jianxue, Shenzhen Guangdong 518129 (CN); LV, Haixing, Shenzhen Guangdong 518129 (CN)
(74) Representative: Gill Jennings & Every LLP
(86) International application number: PCT/CN2015/091674
(87) International publication number: WO 2017/059599

(56) References cited:
- WO-A1-2014/177111
- WO-A1-2015/095995
- CN-A- 101 217 409
- CN-A- 101 516 047
- CN-A- 101 753 343
- CN-A- 101 860 456
- US-A1- 2007 274 341
- "ONT management and control interface specification for B-PON; G.983.2 (04/00); ONT management and control interface specification for ATM PON", ITU-T STANDARD SUPERSEDED (S), INTERNATIONAL TELECOMMUNICATION UNION, GENEVA, CH, no. G.983.2 (04/00), 1 April 2000 (2000-04-01), XP017401180,

## Description

### TECHNICAL FIELD

Embodiments of the present invention relate to the field of communications technologies, and in particular, to a method and a device for upgrading a multi-dwelling unit (MDU).

### BACKGROUND

With continuous development and evolution of fiber-to-the-x (Fiber-to-the-x, FTTx), a quantity of remote multi-dwelling unit (Multi-Dwelling Unit, MDU) devices is increasing, and thousands of MDUs may exist in a region. However, MDU upgrade performance usually becomes a bottleneck. How to quickly upgrade the remote devices increasingly becomes a problem to be urgently resolved in a product solution. In addition, an operator raises a requirement on efficiency of upgrading a mass of MDU devices. For example, an operator raises a demand for upgrading 8000 MDU devices per night.

However, an existing batch upgrade manner accomplishes at most only hundreds of MDUs per night. To accomplish performance of upgrading thousands of MDUs per night, the existing manner needs to be changed. Therefore, how to improve MDU upgrade performance becomes a problem to be urgently resolved.

"ONT management and control interface specification for B-PON; G.983.2 (04/00); ONT management and control interface specification for ATM PON", ITU-T STANDARD SUPERSEDED (S), INTERNATIONAL TELECOMMUNICATION UNION, GENEVA, CH, no. G.983.2 (04/00), 1 April 2000 relates to ONT management and control interface specification for ATM PON.

### SUMMARY

Embodiments of the present invention provide a method and a device for upgrading MDUs, and the method can improve performance of upgrading MDUs.

Various aspects of the present invention are defined in the independent claims. Further technical features of each of the aspects are defined in the respective dependent claims.

Based on the foregoing technical solution, in the embodiments of the present invention, an NMS instructs an OLT to send an upgrade file to multiple MDUs, so that the multiple MDUs perform upgrade according to the upgrade file provided by the OLT. In the embodiments of the present invention, the multiple MDUs are upgraded by the OLT instead of the existing NMS, which can enhance concurrency of upgrading MDUs and improve performance of upgrading MDUs.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of an applicable scenario according to an embodiment of the present invention;
FIG. 2 is a schematic flowchart of a method for upgrading an MDU according to an embodiment of the present invention;
FIG. 3 is a schematic flowchart of a method for upgrading an MDU according to another embodiment of the present invention;
FIG. 4 is a schematic flowchart of a method for upgrading an MDU according to another embodiment of the present invention;
FIG. 5 is a schematic flowchart of a method for upgrading an MDU according to another embodiment of the present invention;
FIG. 6 is a schematic block diagram of an optical line terminal OLT according to an embodiment of the present invention;
FIG. 7 is a schematic block diagram of a multi-dwelling unit MDU according to an embodiment of the present invention;
FIG. 8 is a schematic block diagram of a network management system NMS according to an embodiment of the present invention;
FIG. 9 is a schematic block diagram of an optical line terminal OLT according to an embodiment of the present invention;
FIG. 10 is a schematic block diagram of a multi-dwelling unit MDU according to another embodiment of the present invention; and
FIG. 11 is a schematic block diagram of a network management system NMS according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that the technical solution in the embodiments of the present invention may be applied to various communications systems, for example, may be applied to a digital communications system and an optical communications system; or the technical solution in the embodiments of the present invention may be applied to a wired communications system or a wireless communications system, which is not limited in the embodiments of the present invention.

It should be noted that in a method for upgrading an MDU, when MDUs need to be upgraded throughout a network, each MDU obtains a file from a File Transfer Protocol (File Transfer Protocol, FTP) server (server) successively. Assuming that concurrency of the FTP server is M (for an FTP server, the value of M is fixed, and refers to a quantity of processes in which file transfer is performed concurrently on the FTP server, and the concurrency depends on only performance and resources of the FTP server), a quantity of MDUs to be upgraded is N, and a time for transferring a file from the FTP server to an MDU is T, a total upgrade time is equal to N*T/M. In this upgrade method, at least two problems exist. First, because each MDU needs to establish an FTP connection for downloading the file from the FTP server, when the quantity of MDUs is too large, bandwidth and performance pressure of the FTP server become a bottleneck, and a total upgrade time is extremely long. Second, an NMS needs to deliver a Simple Network Management Protocol (Simple Network Management Protocol, SNMP) instruction to each MDU, and the SNMP instructions include a Set instruction for starting upgrade, a Get instruction for querying progress/a status, and the like. Especially, the Get instruction needs to poll the MDU repeatedly, which imposes an extremely high requirement on performance of the network management system (Network Management System, NMS) and causes low concurrency of MDUs and a long upgrade time.

For the first problem above, in another method for upgrading an MDU, loading is performed between an optical line terminal (Optical Line Terminal, OLT) and an MDU by using a multicast technology. The OLT obtains an upgrade file from the FTP server and buffers the upgrade file locally, and then delivers the upgrade file in a multicast manner. Finally, the upgrade file is concurrently sent to each MDU device. After the MDU is started, a multicast upgrade switch of the MDU is disabled (disable) by default. After a customer creates an upgrade task in the NMS, for example, selects, in a graphical interface, some MDUs that need to be upgraded (or in a file import manner), the NMS automatically delivers an SNMP Set packet of "turning on a multicast upgrade switch" to each MDU. In this case, the MDU sets the multicast upgrade switch to enabled (enabled). In a multicast upgrade process, the OLT actually broadcasts the upgrade file to all MDUs. Only MDUs whose multicast upgrade switches are enabled receive the packet, and an MDU whose multicast upgrade switch is disabled directly discards the packet. After the multicast upgrade is completed or fails, the MDU automatically sets the multicast upgrade switch to a default value of disable. In actual networking, hardware types of most MDUs connected to an OLT are the same, and upgrade files are the same. By means of the multicast upgrade process, the OLT downloads the upgrade file from the FTP server first, and then distributes the upgrade file to each MDU in a multicast manner. In this way, the performance pressure of the FTP server can be relieved and the upgrade time can be shortened. However, a complete upgrade process in this method includes sub-operations such as a pre-upgrade check, device configuration saving, configuration backup, software loading, software activation, and a post-upgrade check. For example, in the sub-operation of device configuration saving, the NMS needs to deliver an SNMP Set instruction of save to the MDU, and then deliver an SNMP Get instruction repeatedly at intervals of 5 seconds to obtain save progress of each MDU. The NMS supports only synchronous processing of an SNMP packet. That is, the NMS sends an SNMP Get/Set instruction to a next MDU only when an SNMP ACK is returned. When there are a large quantity of MDU network elements, it takes a long time. That is, although this method resolves the first problem, the second problem still exists.

Specifically, in terms of a quantity of packets, it takes an average time of approximately 2 or 3 seconds for the NMS to process an SNMP exchange (including: the NMS fills the SNMP packet, sends the packet, receives an ACK, and parses the ACK) in an entire upgrade process. Similar problems exist in configuration backup, software activation, and the like. According to this solution, NMS upgrade efficiency is evaluated below:

| **Upgrade step** | **Efficiency** |
|---|---|
| Pre-upgrade check | Approximately 1000 pieces/hour |
| Save | Approximately 1000 pieces/hour |
| Backup | Approximately 1000 pieces/hour |
| Software loading | Depending on a multicast loading rate of the OLT |
| Activation | Approximately 500 pieces/hour |
| Post-upgrade check | Approximately 500 pieces/hour |

It can be seen that it takes approximately 7 hours for the NMS to complete the operations on 1000 MDUs as "pre-upgrade check, save, backup, activation, and post-upgrade check" alone without including "software loading". Therefore, although this solution considers optimization of file transfer efficiency, it can resolve only the bottleneck of bandwidth and performance in the "software loading" stage, but does not consider overall upgrade efficiency of the NMS in an end-to-end manner, and cannot accomplish the upgrade objective of 8000 pieces per night.

To overcome the foregoing problem, the embodiments of the present invention propose to let the OLT provide specific operations as a proxy for the NMS, and the OLT provides a universal proxy setting and a query mechanism (in this case, the OLT is equivalent to a role of an NMS) for start of operations on each MDU such as a pre-upgrade check, device configuration saving, configuration backup, software loading, software activation, and a post-upgrade check and for some time-consuming polling operations (which are mainly to Get progress repeatedly), which can relieve performance pressure of the NMS. On this prerequisite, a concurrent quantity of MDUs can be increased inside the NMS. For example, the concurrent quantity of MDUs is increased from 60 to 200-300, the concurrency of upgrading MDUs is increased, and the upgrade time is shortened.

In theory, a larger quantity of MDUs of a same hardware type leads to a more obvious advantage of full-proxy upgrade of the OLT. In a typical scenario, a quantity of MDUs connected to one OLT is approximately 60-120. In terms of a maximum capability of an OLT, the quantity of MDUs connected to one OLT may reach 2048 or more. Assuming that a quantity of hardware types of the MDUs is 3-4, a quantity of MDUs of a same hardware type connected to one OLT may be approximately 500 at most. Therefore, the advantage of the full-proxy upgrade of the OLT is extremely obvious. The following gives detailed description with reference to accompanying drawings and specific embodiments.

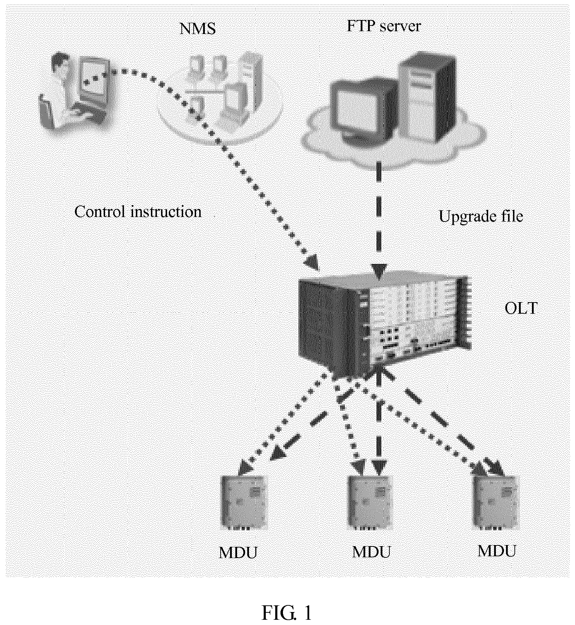

FIG. 1 is a schematic diagram of an applicable scenario according to an embodiment of the present invention. In the scenario shown in FIG. 1, an FTP server (Server), an OLT, an MDU, and an NMS are included. Specifically, in this embodiment of the present invention, the OLT obtains an MDU upgrade control instruction from the NMS, and upgrades the MDU connected to the OLT. The OLT obtains an upgrade file from the FTP server, and the OLT interacts with the MDU as a proxy for the NMS to perform pre-upgrade preparation work, including operations such as a pre-upgrade check, device configuration saving, configuration backup, software loading (the OLT sends the upgrade file to the MDU connected to the OLT in a multicast manner), software activation, and a post-upgrade check.

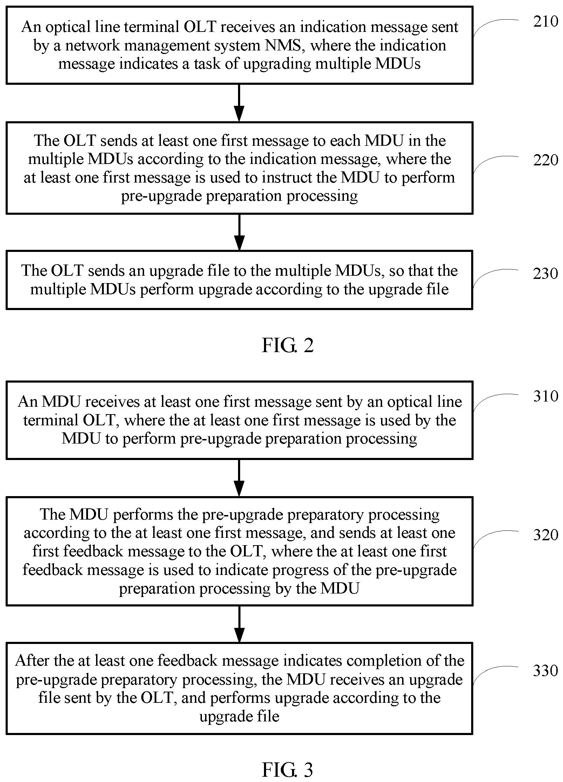

FIG. 2 is a schematic flowchart of a method for upgrading an MDU according to an embodiment of the present invention. The method in FIG. 2 may be executed by an OLT. Specifically, the method shown in FIG. 2 includes:
210. An optical line terminal OLT receives an indication message sent by a network management system NMS, where the indication message indicates a task of upgrading multiple MDUs.
220. The OLT sends at least one first message to each MDU in the multiple MDUs according to the indication message, where the at least one first message is used to instruct the MDU to perform pre-upgrade preparation processing.
230. The OLT sends an upgrade file to the multiple MDUs, so that the multiple MDUs perform upgrade according to the upgrade file.

It should be understood that in this embodiment of the present invention, the indication message may be generated by the NMS according to the task of upgrading the MDU. Specifically, in this embodiment of the present invention, after obtaining a task of upgrading the MDU, the NMS does not upgrade the MDU directly, but generates an indication message according to the upgrade task. The indication message indicates the upgrade task. The NMS sends the indication message to the OLT. Then the OLT upgrades the MDU as a proxy. Specifically, the OLT sends at least one first message to each MDU in the multiple MDUs according to the indication message, where the at least one first message is used to instruct the MDU to perform pre-upgrade preparation processing. Subsequently, the OLT sends an upgrade file to the multiple MDUs, so that the multiple MDUs perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

It should be understood that in this embodiment of the present invention, the task of upgrading the MDU may refer to a need for upgrading the MDU, and may be an upgrade task created by a user in the NMS. For example, a user may enter an IP of an MDU that needs to be upgraded, that is, the NMS uses the IP to identify the MDU; or the upgrade task may be an upgrade task obtained by the NMS in another manner, for example, the upgrade task may be obtained by importing a file, which is not limited in this embodiment of the present invention.

It should also be understood that the indication message may carry parameter information used to log in to the MDU (for example, including an SNMP password and the like), so that the OLT logs in to the MDU according to the parameter information and then interacts with the MDU.

It should be understood that in this embodiment of the present invention, the pre-upgrade preparation processing refers to processing performed before the MDU obtains (loads) an upgrade package, for example, may include a pre-upgrade check, device configuration saving, configuration backup, and the like, which are arranged in time order. This embodiment of the present invention is not limited thereto.

It should also be understood that the multiple MDUs in this embodiment of the present invention refer to MDUs, connected to the OLT, that need to be upgraded. This embodiment of the present invention does not limit a quantity of MDUs, connected to the OLT, that need to be upgraded. For example, the multiple MDUs may be 5, 10, 15, 25, or 50 MDUs. In a special scenario, the multiple MDUs may include only one MDU.

In 230, the OLT may send the upgrade file to the multiple MDUs in a broadcast manner.

In should be noted that in this embodiment of the present invention, when the pre-upgrade preparation processing includes a pre-upgrade check, device configuration saving, and configuration backup, device configuration saving is started only after all the MDUs connected to the OLT complete the pre-upgrade check, and configuration backup is started only after all the MDUs complete device configuration saving. This embodiment of the present invention is not limited thereto.

Optionally, in another embodiment, before 230, the method in this embodiment of the present invention may further include:
receiving, by the OLT, at least one first feedback message sent by the MDU, where the at least one first feedback message is used to indicate progress of the pre-upgrade preparation processing by the MDU.

In 230, the OLT sends the upgrade file to the MDU after the at least one first feedback message indicates completion of the pre-upgrade preparation processing.

Specifically, in this embodiment of the present invention, after obtaining a task of upgrading multiple MDUs, the NMS does not upgrade the MDUs directly, but generates an indication message according to the upgrade task. The indication message indicates the upgrade task, and the indication message is sent to the OLT. Then the OLT upgrades the multiple MDUs as a proxy. Specifically, the OLT sends at least one first message to each MDU in the multiple MDUs, where the at least one first message is used to instruct the MDU to perform pre-upgrade preparation processing. After obtaining the at least one first message, the MDU performs pre-upgrade preparation processing, and feeds back progress of the pre-upgrade preparation processing to the OLT by using at least one first feedback message. That is, the OLT receives the at least one first feedback message sent by the MDU, and the at least one first feedback message is used to indicate the progress of the pre-upgrade preparation processing by the MDU. After the at least one first feedback message indicates completion of the pre-upgrade preparation processing, the OLT sends an upgrade file to the multiple MDUs, so that the multiple MDUs perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

It should be understood that there are multiple MDUs connected to an OLT, and that the first feedback message indicates completion of the pre-upgrade preparation processing means that all the MDUs connected to the same OLT complete the pre-upgrade preparation processing. After the first feedback message indicates completion of the pre-upgrade preparation processing, the OLT may send an upgrade file to multiple MDUs in a broadcast manner.

It should also be understood that a quantity of the at least one first message may be equal to or different from a quantity of the at least one first feedback message. In an embodiment, the at least one first message is in a one-to-one correspondence with the at least one first feedback message, which, however, is not limited in this embodiment of the present invention.

Optionally, in another embodiment, before 230, the method in this embodiment of the present invention may further include:
sending, by the OLT, a first reporting message to the NMS, where the first reporting message is used by the NMS to determine progress of pre-upgrade preparation processing by the multiple MDUs.

Specifically, after obtaining the at least one first feedback message sent by the MDU, the OLT obtains progress of the pre-upgrade preparation, and the OLT generates a first reporting message according to the progress, and sends the first reporting message to the NMS. The first reporting message is used by the NMS to determine the progress of the pre-upgrade preparation processing by the MDU. Therefore, the NMS can display the progress to a user by using a graphical interface, thereby enhancing user experience.

Further, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration.

The at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

When the at least one first message includes the pre-upgrade check indication message, the device configuration saving indication message, and the configuration backup indication message, and the at least one first feedback message includes the pre-upgrade check progress message, the device configuration saving progress message, and the configuration backup progress message, the pre-upgrade preparation processing is completed after the pre-upgrade check, the device configuration saving, and the configuration backup are all completed. That is, when all processing that is performed by the MDU and indicated by the at least one first message is completed, the pre-upgrade preparation processing is completed.

It should be noted that at least one first feedback message corresponds to at least one first message. For example, the at least one first feedback message may include the pre-upgrade check progress message only if the at least one first message includes the pre-upgrade check indication message. That is, a subsequent first feedback message (the pre-upgrade check progress message) may exist only when processing (the pre-upgrade check) indicated by the first message exists.

Optionally, in another embodiment, the first message and the first feedback message are simple network management protocol SNMP messages.

It should be understood that the first message and the first feedback message may also be messages of another type, which is not limited in this embodiment of the present invention.

Optionally, in another embodiment, after 230, the method in this embodiment of the present invention may further include:
receiving, by the OLT, an upgrade file loading progress message sent by each MDU in the multiple MDUs, where the loading progress message is used to indicate progress of loading the upgrade file of the MDU;
sending, by the OLT, at least one second message to each MDU in the multiple MDUs after completion of loading the upgrade file of the MDU, where the at least one second message is used to instruct the MDU to perform processing that follows the upgrade file loading; and
receiving, by the OLT, at least one second feedback message sent by the MDU, where the at least one second feedback message is used to indicate progress of the processing that follows the upgrade file loading by the MDU.

Specifically, when loading the upgrade file, the MDU feeds back the loading progress to the OLT periodically, and after completion of loading the upgrade file of the MDU, the OLT sends at least one second message to the MDU, to instruct the MDU to perform processing that follows the upgrade file loading. In addition, the OLT receives at least one second feedback message sent by the MDU, so as to determine progress of the processing that follows the upgrade file loading by the MDU. Completion of loading the upgrade file of the MDU means that all MDUs connected to the OLT complete upgrade file loading.

It should be understood that in this embodiment of the present invention, the processing that follows the upgrade file loading by the MDU refers to processing performed after the MDU obtains (loads) an upgrade package, for example, may include software activation, a post-upgrade check, and the like, which is not limited in this embodiment of the present invention.

It should also be understood that a quantity of the at least one second message may be equal to or different from a quantity of the at least one second feedback message. In an embodiment, the at least one second message is in a one-to-one correspondence with the at least one second feedback message, which, however, is not limited in this embodiment of the present invention.

It should be noted that in this embodiment of the present invention, when the processing that follows the upgrade file loading by the MDU includes software activation and a post-upgrade check, the post-upgrade check is started only after all MDUs connected to the OLT complete software loading. This embodiment of the present invention is not limited thereto.

Further, in another embodiment, the method in this embodiment of the present invention may further include:
sending, by the OLT, a second reporting message to the NMS, where the second reporting message is used to indicate progress of processing that follows upgrade file loading by the multiple MDUs.

Specifically, after obtaining at least one second feedback message sent by multiple MDUs, the OLT obtains progress of processing that follows upgrade file loading by the multiple MDUs. The OLT generates a second reporting message according to the progress, and sends a second reporting message to the NMS, where the second reporting message is used to indicate the progress of the processing that follows upgrade file loading by the multiple MDUs. Further, the NMS may display the progress to the user by using a graphical interface, so as to enhance user experience.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU; and the at least one second feedback message includes at least one of a software activation progress message or a post-upgrade check progress message, and the software activation progress message and the post-upgrade check progress message are respectively used to indicate progress of the software activation processing and progress of the post-upgrade check processing. Completion of the progress of the processing that follows the upgrade file loading by the MDU means completion of upgrading the MDU.

It should be noted that at least one second feedback message corresponds to at least one second message. For example, the at least one second feedback message may include the post-upgrade check progress message only if the at least one second message includes the post-upgrade check indication message. That is, a subsequent second feedback message (the post-upgrade check progress message) may exist only when processing (the post-upgrade check) indicated by the second message exists.

Optionally, in another embodiment, the loading progress message, the second message, and the second feedback message are SNMP messages.

It should be understood that the loading progress message, the second message, and the second feedback message may also be messages of another type, which is not limited in this embodiment of the present invention.

Optionally, in another embodiment, after 210, the method in this embodiment of the present invention may further include: sending, by the OLT, an upgrade start message to the multiple MDUs according to the indication message, where the upgrade start message is used to instruct the multiple MDUs to turn on upgrade switches, so that the multiple MDUs receive the upgrade file.

Specifically, after the MDU is started, a multicast upgrade switch of the MDU is disabled (disable) by default. After a customer creates an upgrade task in the NMS, for example, selects, in a graphical interface, MDUs that need to be upgraded (or in a file import manner), the OLT sends an upgrade start message to the MDU according to an indication of the NMS, so as to turn on a multicast upgrade switch of the MDU. In this case, the MDU sets the multicast upgrade switch to enabled (enable). In a multicast upgrade process, the OLT actually broadcasts the upgrade file to all MDUs. Only MDUs whose multicast upgrade switches are enabled receive the packet, and an MDU whose multicast upgrade switch is disabled directly discards the packet. After the multicast upgrade is completed or fails, the MDU automatically sets the multicast upgrade switch to a default value of disable.

Optionally, in another embodiment, before 210, the method in this embodiment of the present invention may further include:
obtaining, by the OLT, a function component, where the function component is used by the OLT to load a function of interacting with the MDU, so as to upgrade the MDU.

Specifically, serving as an aggregation switch, an existing OLT directly migrates a software management function (for example, a function such as pre-upgrade and post-upgrade check of the MDU) of the NMS to the OLT, which may cause architecture coupling of the OLT and the MDU and cause subsequent associated upgrade (that is, both the OLT and the MDU need to be upgraded). Therefore, a componentized conception is used in this embodiment of the present invention, that is, the NMS componentizes the upgrade management function, and the OLT dynamically loads and unloads the component in a manner similar to a dynamic link library. In this embodiment of the present invention, by loading a component, the OLT upgrades the MDU as a proxy for the NMS, which is equivalent to indirectly provide, by the OLT, a universal proxy to upgrade the MDU without upgrading the OLT, thereby avoiding associated upgrade. In addition, this embodiment of the present invention can enhance concurrency of upgrading MDUs, shorten a time of upgrading multiple MDUs, and improve performance of upgrading MDUs.

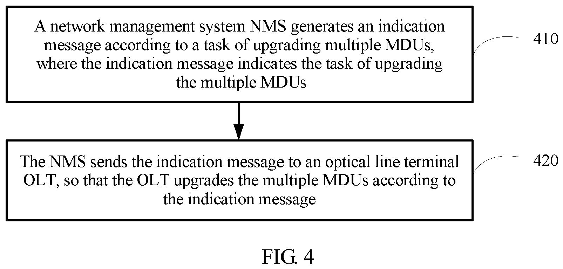

The foregoing describes the method for upgrading an MDU in the embodiments of the present invention with reference to FIG. 2 from a perspective of an OLT side, and the following describes the method for upgrading an MDU in the embodiments of the present invention with reference to FIG. 3 and FIG. 4 from perspectives of an MDU side and an NMS side.

FIG. 3 is a schematic flowchart of a method for upgrading an MDU according to another embodiment of the present invention. The method in FIG. 3 may be executed by an MDU. Specifically, the method shown in FIG. 3 includes:
310. An MDU receives at least one first message sent by an optical line terminal OLT, where the at least one first message is used by the MDU to perform pre-upgrade preparation processing.
320. The MDU performs the pre-upgrade preparation processing according to the at least one first message, and sends at least one first feedback message to the OLT, where the at least one first feedback message is used to indicate progress of the pre-upgrade preparation processing by the MDU.
330. After the at least one first feedback message indicates completion of the pre-upgrade preparation processing, the MDU receives an upgrade file sent by the OLT, and performs upgrade according to the upgrade file.

Specifically, in this embodiment of the present invention, after obtaining a task of upgrading the MDU, the NMS does not upgrade the MDU directly, but generates an indication message according to the upgrade task. The indication message indicates the upgrade task. The NMS sends the indication message to the OLT. Then the OLT upgrades the MDU as a proxy. Specifically, the OLT sends at least one first message to the MDU, and the at least one first message is used by the MDU to perform pre-upgrade preparation processing. After obtaining the at least one first message, the MDU performs pre-upgrade preparation processing, and feeds back progress of the pre-upgrade preparation processing to the OLT by using at least one first feedback message. That is, the OLT receives the at least one first feedback message sent by the MDU, and the at least one first feedback message is used to indicate progress of the pre-upgrade preparation processing by the MDU. After the feedback message indicates completion of the pre-upgrade preparation processing, the OLT sends an upgrade file to the MDU, so that the MDU performs upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

It should be understood that in this embodiment of the present invention, the pre-upgrade preparation processing refers to processing performed before the MDU obtains (loads) an upgrade package, for example, may include a pre-upgrade check, device configuration saving, configuration backup, and the like, which are arranged in time order. This embodiment of the present invention is not limited thereto.

It should also be understood that the MDU in this embodiment of the present invention may refer to one of multiple MDUs, connected to the OLT, that need to be upgraded. This embodiment of the present invention does not limit a quantity of MDUs, connected to the OLT, that need to be upgraded. For example, the multiple MDUs may be 5, 10, 15, 25, or 50 MDUs. In a special scenario, the multiple MDUs may include only one MDU.

It should also be understood that, that the first feedback message indicates completion of the pre-upgrade preparation processing means that all to-be-upgraded MDUs connected to the same OLT complete the pre-upgrade preparation processing. After the first feedback message indicates completion of the pre-upgrade preparation processing, the MDU may send an upgrade file to the multiple MDUs in a broadcast manner.

In should be noted that in this embodiment of the present invention, when the pre-upgrade preparation processing includes a pre-upgrade check, device configuration saving, and configuration backup, device configuration saving is started only after all the MDUs connected to the OLT complete the pre-upgrade check, and configuration backup is started only after all the MDUs complete device configuration saving. This embodiment of the present invention is not limited thereto.

It should also be understood that a quantity of the at least one first message may be equal to or different from a quantity of the at least one first feedback message. In an embodiment, the at least one first message is in a one-to-one correspondence with the at least one first feedback message, which, however, is not limited in this embodiment of the present invention.

Optionally, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration.

The at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

It should be noted that at least one first feedback message corresponds to at least one first message. For example, the at least one first feedback message may include the pre-upgrade check progress message only if the at least one first message includes the pre-upgrade check indication message. That is, a subsequent first feedback message (the pre-upgrade check progress message) may exist only when processing (the pre-upgrade check) indicated by the first message exists.

Optionally, in another embodiment, the first message and the first feedback message are simple network management protocol SNMP messages.

It should be understood that the first message and the first feedback message may also be messages of another type, which is not limited in this embodiment of the present invention.

Optionally, in another embodiment, after 330, the method may further include: sending, by the MDU, an upgrade file loading progress message to the OLT, where the loading progress message is used by the OLT to determine progress of loading the upgrade file of the MDU; receiving, by the MDU after completion of loading the upgrade file of the MDU, at least one second message sent by the OLT, where the at least one second message is used by the MDU to perform processing that follows the upgrade file loading; and performing, by the MDU according to the at least one second message, the processing that follows the upgrade file loading, and sending at least one second feedback message to the OLT, where the at least one second feedback message is used to indicate progress of the processing that follows the upgrade file loading by the MDU.

Specifically, when loading the upgrade file, the MDU feeds back the loading progress to the OLT periodically, and after completion of loading the upgrade file of the MDU, the OLT sends at least one second message to the MDU, to instruct the MDU to perform processing that follows the upgrade file loading. In addition, the OLT receives at least one second feedback message sent by the MDU, so as to determine progress of the processing that follows the upgrade file loading by the MDU. Completion of loading the upgrade file of the MDU means that all MDUs connected to the OLT complete upgrade file loading.

It should be understood that in this embodiment of the present invention, the processing that follows the upgrade file loading by the MDU refers to processing performed after the MDU obtains (loads) an upgrade package, for example, may include software activation, a post-upgrade check, and the like, which is not limited in this embodiment of the present invention.

It should also be understood that a quantity of the at least one second message may be equal to or different from a quantity of the at least one second feedback message. In an embodiment, the at least one second message is in a one-to-one correspondence with the at least one second feedback message, which, however, is not limited in this embodiment of the present invention.

It should be noted that in this embodiment of the present invention, when the processing that follows the upgrade file loading by the MDU includes software activation and a post-upgrade check, the post-upgrade check is started only after all MDUs connected to the OLT complete software loading. This embodiment of the present invention is not limited thereto.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU; and the at least one second feedback message includes at least one of a software activation progress message or a post-upgrade check progress message, and the software activation progress message and the post-upgrade check progress message are respectively used to indicate progress of the software activation processing and progress of the post-upgrade check processing.

It should be noted that at least one second feedback message corresponds to at least one second message. For example, the at least one second feedback message may include the post-upgrade check progress message only if the at least one second message includes the post-upgrade check indication message. That is, a subsequent second feedback message (the post-upgrade check progress message) may exist only when processing (the post-upgrade check) indicated by the second message exists.

Optionally, in another embodiment, the loading progress message, the second message, and the second feedback message are SNMP messages.

It should be understood that the loading progress message, the second message, and the second feedback message may also be messages of another type, which is not limited in this embodiment of the present invention.

Optionally, in another embodiment, before 310, the method may further include: receiving, by the MDU, an upgrade start message sent by the OLT; and turning on, by the MDU, an upgrade switch according to the upgrade start message, so as to receive the upgrade file.

Specifically, after the MDU is started, a multicast upgrade switch of the MDU is disabled (disable) by default. After a customer creates an upgrade task in the NMS, for example, selects, in a graphical interface, MDUs that need to be upgraded (or in a file import manner), the OLT sends an upgrade start message to the MDU according to an indication of the NMS, so as to turn on a multicast upgrade switch of the MDU. In this case, the MDU sets the multicast upgrade switch to enabled (enable). In a multicast upgrade process, the OLT actually broadcasts the upgrade file to all MDUs. Only MDUs whose multicast upgrade switches are enabled receive the packet, and an MDU whose multicast upgrade switch is disabled directly discards the packet. After the multicast upgrade is completed or fails, the MDU automatically sets the multicast upgrade switch to a default value of disable.

FIG. 4 is a schematic flowchart of a method for upgrading an MDU according to another embodiment of the present invention. The method in FIG. 4 may be executed by an NMS. Specifically, the method shown in FIG. 4 includes:
410. A network management system NMS generates an indication message according to a task of upgrading multiple MDUs, where the indication message indicates the task of upgrading the multiple MDUs.
420. The NMS sends the indication message to an optical line terminal OLT, so that the OLT upgrades the multiple MDUs according to the indication message.

Specifically, in this embodiment of the present invention, after obtaining a task of upgrading multiple MDUs, the NMS does not upgrade the multiple MDUs directly, but generates an indication message according to the upgrade task. The indication message indicates the upgrade task. The NMS sends the indication message to the OLT. Then the OLT upgrades the MDUs as a proxy. Specifically, the OLT obtains the upgrade task according to the indication message, and sends an upgrade file to the multiple MDUs, so that the MDUs perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

It should be understood that in this embodiment of the present invention, the task of upgrading the MDU may refer to a need for upgrading the MDU, and may be an upgrade task created by a user in the NMS. For example, a user may enter an IP of an MDU that needs to be upgraded, that is, the NMS uses the IP to identify the MDU; or the upgrade task may be an upgrade task obtained by the NMS in another manner, for example, the upgrade task may be obtained by importing a file, which is not limited in this embodiment of the present invention.

It should also be understood that the multiple MDUs in this embodiment of the present invention refer to MDUs, connected to the OLT, that need to be upgraded. This embodiment of the present invention does not limit a quantity of MDUs, connected to the OLT, that need to be upgraded. For example, the multiple MDUs may be 5, 10, 15, 25, or 50 MDUs. In a special scenario, the multiple MDUs may include only one MDU.

Optionally, in another embodiment, after 420, the method in this embodiment of the present invention may further include:
receiving, by the NMS, a first reporting message sent by the OLT, where the first reporting message is used by the NMS to determine progress of pre-upgrade preparation processing by the multiple MDUs.

Specifically, the OLT generates the first reporting message according to the progress of the pre-upgrade preparation processing by the multiple MDUs, and sends the first reporting message to the NMS. The first reporting message is used by the NMS to determine the progress of the pre-upgrade preparation processing by the multiple MDUs, and then the NMS can display the progress to a user by using a graphical interface, thereby enhancing user experience.

Optionally, in another embodiment, after 420, the method in this embodiment of the present invention may further include:

receiving, by the NMS, a second reporting message sent by the OLT, where the second reporting message is used to indicate progress of processing that follows upgrade file loading by the multiple MDUs.

Specifically, the OLT generates the second reporting message according to the progress of the processing that follows upgrade file loading by the multiple MDUs, and sends the second reporting message to the NMS, where the second reporting message is used by the NMS to determine the progress of the processing that follows upgrade file loading by the multiple MDUs. Further, the NMS may display the progress to the user by using a graphical interface, so as to enhance user experience.

Optionally, in another embodiment, before 410, the method in this embodiment of the present invention may further include:
creating, by the NMS, a function component and sending the function component to the OLT, where the function component is used by the OLT to load a function of interacting with the MDU, so as to upgrade the MDU.

Specifically, serving as an aggregation switch, an existing OLT directly migrates a software management function (for example, a function such as pre-upgrade and post-upgrade check of the MDU) of the NMS to the OLT, which may cause architecture coupling of the OLT and the MDU and cause subsequent associated upgrade (that is, both the OLT and the MDU need to be upgraded). Therefore, a componentized conception is used in this embodiment of the present invention, that is, the NMS componentizes the upgrade management function, and the OLT dynamically loads and unloads the component in a manner similar to a dynamic link library. In this embodiment of the present invention, by loading a component, the OLT upgrades the MDU as a proxy for the NMS, which is equivalent to indirectly provide, by the OLT, a universal proxy to upgrade the MDU without upgrading the OLT, thereby avoiding associated upgrade. In addition, this embodiment of the present invention can enhance concurrency of upgrading MDUs, shorten a time of upgrading multiple MDUs, and improve performance of upgrading MDUs.

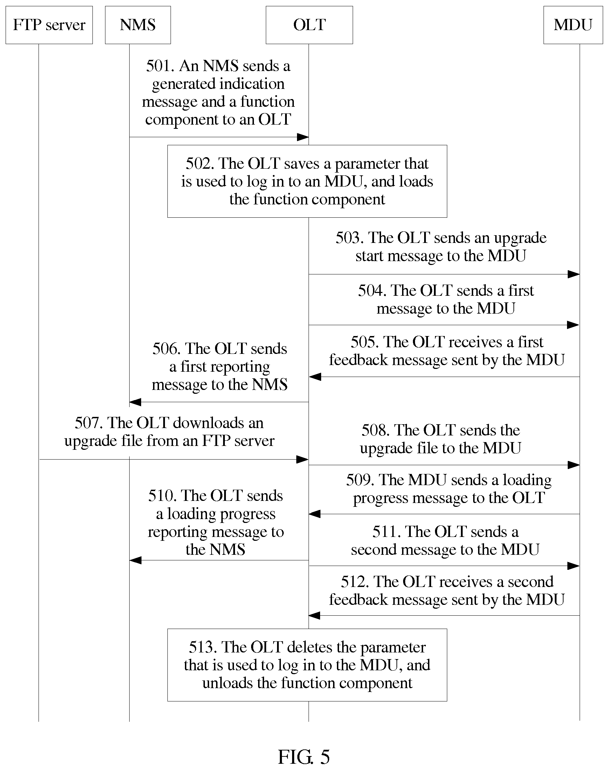

The foregoing describes the method for upgrading an MDU in the embodiments of the present invention with reference to FIG. 2 from a perspective of an OLT side, describes the method for upgrading an MDU in the embodiments of the present invention with reference to FIG. 3 from a perspective of an MDU side, and describes the method for upgrading an MDU in the embodiments of the present invention with reference to FIG. 4 from a perspective of an NMS side. The following describes the method for upgrading an MDU in the embodiments of the present invention in more detail with reference to a specific example in FIG. 5.

It should be noted that the examples in FIG. 2 to FIG. 5 are merely intended to help a person skilled in the art understand the embodiments of the present invention, but the embodiments of the present invention are not limited to a specific value or a specific scenario in the examples. A person skilled in the art may perform various equivalent modifications or changes according to the examples given in FIG. 2 to FIG. 5, and such modifications or changes also fall within the scope of the embodiments of the present invention.

FIG. 5 is a schematic flowchart of a method for upgrading an MDU according to another embodiment of the present invention. It should be understood that in the embodiment in FIG. 5, only a process of upgrading one MDU in multiple MDUs, connected to an OLT, that need to be upgraded is described. A process of upgrading another MDU, connected to the OLT, that needs to be upgraded is similar to the process of upgrading this MDU, and is not described in detail herein any further. Specifically, the method shown in FIG. 5 includes:
501. An NMS sends a generated indication message and a function component to an OLT.

Specifically, the NMS generates an indication message according to an upgrade task, and sends the indication message to the OLT, where the indication message indicates the task of upgrading the MDU.

In addition, the NMS creates a function component and sends the function component to the OLT, where the function component is used by the OLT to load a function of interacting with the MDU, so as to upgrade the MDU.

502. The OLT saves a parameter that is used to log in to an MDU, and loads the function component.

Specifically, the indication message may carry parameter information used to log in to the MDU, and the OLT logs in to the MDU according to the parameter information and loads the function component, and then interacts with the MDU.

503. The OLT sends an upgrade start message to the MDU.

Specifically, the upgrade start message is used to instruct the MDU to turn on an upgrade switch, so that the MDU receives an upgrade file.

Specifically, after the MDU is started, a multicast upgrade switch of the MDU is disabled (disable) by default. After a customer creates an upgrade task in the NMS, for example, selects, in a graphical interface, MDUs that need to be upgraded (or in a file import manner), the OLT sends an upgrade start message to the MDU according to an indication of the NMS, so as to turn on a multicast upgrade switch of the MDU. In this case, the MDU sets the multicast upgrade switch to enabled (enable). In a multicast upgrade process, the OLT actually broadcasts the upgrade file to all MDUs. Only MDUs whose multicast upgrade switches are enabled receive the packet, and an MDU whose multicast upgrade switch is disabled directly discards the packet. After the multicast upgrade is completed or fails, the MDU automatically sets the multicast upgrade switch to a default value of disable.

504. The OLT sends a first message to the MDU.

Specifically, the first message is used by the MDU to perform pre-upgrade preparation processing. After obtaining the first message, the MDU performs the pre-upgrade preparation processing, and feeds back progress of the pre-upgrade preparation processing to the OLT by using a first feedback message.

The pre-upgrade preparation processing refers to processing performed before the MDU obtains (loads) an upgrade package, for example, may include a pre-upgrade check, device configuration saving, configuration backup, and the like, which are arranged in time order. This embodiment of the present invention is not limited thereto.

505. The OLT receives a first feedback message sent by the MDU.

Specifically, the first feedback message is used to indicate the progress of the pre-upgrade preparation processing by the MDU.

For example, the first feedback message is used to indicate progress of the pre-upgrade check, progress of saving a device configuration, and progress of backing up a configuration.

506. The OLT sends a first reporting message to the NMS.

Specifically, after obtaining the first feedback message sent by the MDU, the OLT obtains progress of the pre-upgrade preparation. The OLT generates a first reporting message according to the progress, and sends the first reporting message to the NMS. The first reporting message is used by the NMS to determine the progress of the pre-upgrade preparation processing by the MDU. Further, the NMS may display the progress to a user by using a graphical interface, so as to enhance user experience.

507. The OLT downloads an upgrade file from an FTP server.

508. The OLT sends the upgrade file to the MDU.

In addition, after the feedback message indicates completion of the pre-upgrade preparation processing, the OLT sends the upgrade file to the MDU.

509. The MDU sends a loading progress message to the OLT.

Specifically, when loading the upgrade file, the MDU feeds back the loading progress to the OLT periodically.

510. The OLT sends a loading progress reporting message to the NMS.

Specifically, after obtaining the progress of loading the upgrade file by the MDU, the OLT sends a loading progress reporting message to the NMS. The loading progress reporting message is used by the NMS to determine the progress of loading the upgrade file by the MDU, and then the NMS may display the progress to the user by using a graphical interface, so as to enhance user experience.

511. The OLT sends a second message to the MDU.

Specifically, after completion of loading the upgrade file of the MDU, the OLT sends a second message to the MDU, where the second message is used by the MDU to perform processing that follows the upgrade file loading.

The processing that follows the upgrade file loading by the MDU refers to processing performed after the MDU obtains (loads) an upgrade package, for example, may include software activation, a post-upgrade check, and the like, which is not limited in this embodiment of the present invention.

512. The OLT receives a second feedback message sent by the MDU.

The second feedback message is used to indicate progress of the processing that follows the upgrade file loading by the MDU.

For example, the second feedback message is specifically used to indicate progress of activating software and progress of the post-upgrade check.

513. The OLT deletes the parameter that is used to log in to the MDU, and unloads the function component.

Specifically, after completion of the progress of the processing that follows the upgrade file loading by the MDU, the OLT deletes the parameter that is used to log in to the MDU, and unloads the function component.

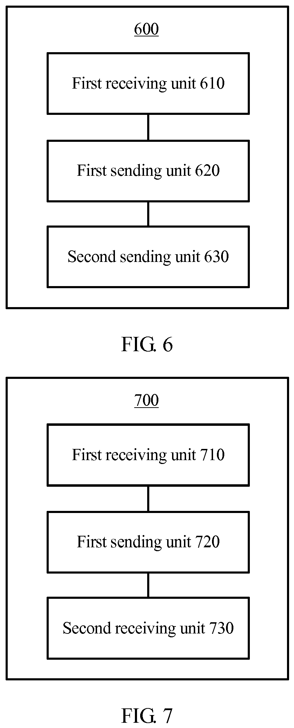

The foregoing describes the method for upgrading an MDU in the embodiments of the present invention with reference to FIG. 1 to FIG. 5, and the following describes a device for upgrading an MDU in the embodiments of the present invention with reference to FIG. 6 to FIG. 11.

FIG. 6 is a schematic block diagram of an optical line terminal OLT according to an embodiment of the present invention. The OLT 600 shown in FIG. 6 corresponds to the method shown in FIG. 2, and can implement each process in the method embodiment in FIG. 2. For specific functions of the OLT 600, reference may be made to corresponding description in FIG. 2. To avoid repetition, detailed description is appropriately omitted herein.

Specifically, the OLT 600 includes: a first receiving unit 610, a first sending unit 620, and a second sending unit 630.

The first receiving unit 610 is configured to receive an indication message sent by a network management system NMS, where the indication message indicates a task of upgrading multiple MDUs. The first sending unit 620 is configured to send at least one first message to each MDU in the multiple MDUs according to the indication message, where the at least one first message is used to instruct the MDU to perform pre-upgrade preparation processing. The second sending unit 630 is configured to send an upgrade file to the multiple MDUs, so that the multiple MDUs perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

Optionally, in another embodiment, the OLT 600 may further include a second receiving unit.

Specifically, the second receiving unit is configured to receive at least one first feedback message sent by the MDU, where the at least one first feedback message is used to indicate progress of the pre-upgrade preparation processing by the MDU. The second sending unit sends the upgrade file to the MDU after the at least one first feedback message indicates completion of the pre-upgrade preparation processing.

Optionally, in another embodiment, the OLT 600 may further include a third sending unit.

Specifically, the third sending unit is configured to send a first reporting message to the NMS before the second sending unit sends the upgrade file to the multiple MDUs, where the first reporting message is used to indicate progress of pre-upgrade preparation processing by the multiple MDUs.

Optionally, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and the at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

Optionally, in another embodiment, the first message and the first feedback message are simple network management protocol SNMP messages.

Optionally, in another embodiment, the OLT 600 may further include a third receiving unit, a fourth sending unit, and a fourth receiving unit.

Specifically, the third receiving unit is configured to: after the second sending unit sends the upgrade file to the multiple MDUs, receive an upgrade file loading progress message sent by each MDU in the multiple MDUs, where the loading progress message is used to indicate progress of loading the upgrade file of the MDU.

The fourth sending unit is configured to send at least one second message to each MDU in the multiple MDUs after completion of loading the upgrade file of the MDU, where the at least one second message is used to instruct the MDU to perform processing that follows the upgrade file loading.

The fourth receiving unit is configured to receive at least one second feedback message sent by the MDU, where the at least one second feedback message is used to indicate progress of the processing that follows the upgrade file loading by the MDU.

Optionally, in another embodiment, the OLT 600 may further include a fifth sending unit.

Specifically, the fifth sending unit is configured to send a second reporting message to the NMS, where the second reporting message is used to indicate progress of processing that follows upgrade file loading by the multiple MDUs.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU.

The at least one second feedback message includes at least one of a software activation progress message or a post-upgrade check progress message, and the software activation progress message and the post-upgrade check progress message are respectively used to indicate progress of the software activation processing and progress of the post-upgrade check processing.

Optionally, in another embodiment, the loading progress message, the second message, and the second feedback message are SNMP messages.

Optionally, in another embodiment, the OLT 600 may further include a sixth sending unit.

Specifically, the sixth sending unit is configured to: after the first receiving unit receives the indication message sent by the network management system NMS, send an upgrade start message to the multiple MDUs according to the indication message, where the upgrade start message is used to instruct the multiple MDUs to turn on upgrade switches, so that the multiple MDUs receive the upgrade file.

Optionally, in another embodiment, the OLT 600 may further include an obtaining unit.

Specifically, the obtaining unit is configured to obtain a function component before the first receiving unit receives the indication message sent by the network management system NMS, where the function component is used by the OLT to load a function of interacting with the MDU, so as to upgrade the MDU.

FIG. 7 is a schematic block diagram of a multi-dwelling unit MDU according to an embodiment of the present invention. The MDU 700 shown in FIG. 7 corresponds to the method shown in FIG. 3, and can implement each process in the method embodiment in FIG. 3. For specific functions of the MDU 700, reference may be made to corresponding description in FIG. 3. To avoid repetition, detailed description is appropriately omitted herein.

Specifically, the MDU 700 includes: a first receiving unit 710, a first sending unit 720, and a second receiving unit 730.

The first receiving unit 710 is configured to receive at least one first message sent by an optical line terminal OLT, where the at least one first message is used by the MDU to perform pre-upgrade preparation processing.

The first sending unit 720 is configured to perform the pre-upgrade preparation processing according to the at least one first message, and send at least one first feedback message to the OLT, where the at least one first feedback message is used to indicate progress of the pre-upgrade preparation processing by the MDU.

The second receiving unit 730 is configured to: after the at least one first feedback message indicates completion of the pre-upgrade preparation processing, receive an upgrade file sent by the OLT, and perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

Optionally, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and the at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

Optionally, in another embodiment, the first message and the first feedback message are simple network management protocol SNMP messages.

Optionally, in another embodiment, the MDU 700 may further include a second sending unit, a third receiving unit, and a third sending unit.

Specifically, the second sending unit is configured to: after the second receiving unit receives the upgrade file sent by the OLT, send an upgrade file loading progress message to the OLT, where the loading progress message is used by the OLT to determine progress of loading the upgrade file of the MDU.

The third receiving unit is configured to: after completion of loading the upgrade file of the MDU, receive at least one second message sent by the OLT, where the at least one second message is used by the MDU to perform processing that follows the upgrade file loading.

The third sending unit is configured to: perform, according to the at least one second message, the processing that follows the upgrade file loading, and send at least one second feedback message to the OLT, where the at least one second feedback message is used to indicate progress of the processing that follows the upgrade file loading by the MDU.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU; and the at least one second feedback message includes at least one of a software activation progress message or a post-upgrade check progress message, and the software activation progress message and the post-upgrade check progress message are respectively used to indicate progress of the software activation processing and progress of the post-upgrade check processing.

Optionally, in another embodiment, the loading progress message, the second message, and the second feedback message are SNMP messages.

Optionally, in another embodiment, the MDU 700 may further include a fourth receiving unit and a start unit.

Specifically, the fourth receiving unit is configured to: before the first receiving unit receives the first message sent by the optical line terminal OLT, receive an upgrade start message sent by the OLT; and the start unit is configured to turn on an upgrade switch according to the upgrade start message, so as to receive the upgrade file.

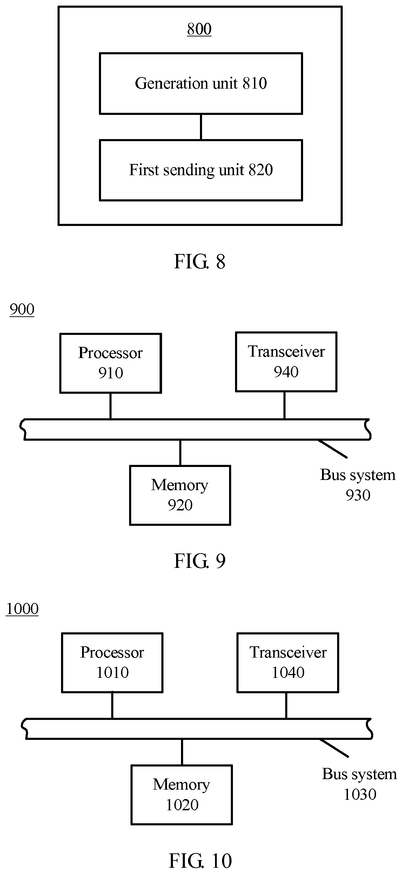

FIG. 8 is a schematic block diagram of a network management system NMS according to an embodiment of the present invention. The NMS 800 shown in FIG. 8 corresponds to the method shown in FIG. 4, and can implement each process in the method embodiment in FIG. 4. For specific functions of the NMS 800, reference may be made to corresponding description in FIG. 4. To avoid repetition, detailed description is appropriately omitted herein.

Specifically, the NMS 800 includes: a generation unit 810, and a first sending unit 820.

The generation unit 810 is configured to generate an indication message according to a task of upgrading multiple MDUs, where the indication message indicates the task of upgrading the multiple MDUs.

The first sending unit 820 is configured to send the indication message to an optical line terminal OLT, so that the OLT upgrades the multiple MDUs according to the indication message.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

Optionally, in another embodiment, the NMS 800 may further include a first receiving unit.

Specifically, the first receiving unit is configured to: after the first sending unit sends the indication message to the optical line terminal OLT, receive a first reporting message sent by the OLT, where the first reporting message is used by the NMS to determine progress of pre-upgrade preparation processing by the multiple MDUs.

Optionally, in another embodiment, the NMS 800 may further include a second receiving unit.

Specifically, the second receiving unit is configured to: after the first sending unit sends the indication message to the optical line terminal OLT, receive a second reporting message sent by the OLT, where the second reporting message is used to indicate progress of processing that follows upgrade file loading by the multiple MDUs.

Optionally, in another embodiment, the NMS 800 may further include a second sending unit.

Specifically, the second sending unit is configured to: before the first sending unit sends the indication message to the optical line terminal OLT, create a function component and send the function component to the OLT, where the function component is used by the OLT to load a function of interacting with the multiple MDUs, so as to upgrade the multiple MDUs.

FIG. 9 is a schematic block diagram of an optical line terminal OLT according to an embodiment of the present invention. The OLT 900 shown in FIG. 9 corresponds to the method shown in FIG. 2, and can implement each process in the method embodiment in FIG. 2. For specific functions of the OLT 900, reference may be made to corresponding description in FIG. 2. To avoid repetition, detailed description is appropriately omitted herein.

The OLT 900 shown in FIG. 9 includes a processor 910, a memory 920, a bus system 930, and a transceiver 940.

Specifically, the processor 910 invokes, by using the bus system 930, code stored in the memory 920; controls the transceiver 940 to receive an indication message sent by a network management system NMS, where the indication message indicates a task of upgrading multiple MDUs; sends at least one first message to each MDU in the multiple MDUs according to the indication message, where the at least one first message is used to instruct the MDU to perform pre-upgrade preparation processing; and sends an upgrade file to the multiple MDUs, so that the multiple MDUs perform upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

The method disclosed in the embodiment of the present invention may be applied to the processor 910, or implemented by the processor 910. The processor 910 may be an integrated circuit chip with a signal processing capability. In an implementation process, the steps of the method may be implemented by using an integrated logical circuit of hardware in the processor 910, or by using a software instruction. The processor 910 may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or other programmable logical devices, a discrete gate or transistor logical device, or a discrete hardware assembly. The processor may implement or execute methods, steps and logical block diagrams disclosed in the embodiments of the present invention. The general purpose processor may be a microprocessor, or the processor may also be any conventional processor or the like. The steps of the methods disclosed with reference to the embodiments of the present invention may be directly implemented by a hardware decoding processor, or may be implemented by a combination of hardware and a software module in a decoding processor. The software module may be located in a storage medium that is mature in the art, such as a random access memory (Random Access Memory, RAM), a flash memory, a read-only memory (Read-Only Memory, ROM), a programmable read-only memory, or an electrically erasable programmable memory, or a register. The storage medium is located in the memory 920, and the processor 910 reads information in the memory 920 and implements, in combination with its hardware, the steps of the foregoing methods. The bus system 930 may include not only a data bus but also a power supply bus, a control bus, a status signal bus and the like. However, for clarity, various types of buses in the figure are marked as the bus system 930.

Optionally, in another embodiment, the transceiver 940 may be further configured to receive at least one first feedback message sent by the MDU, where the at least one first feedback message is used to indicate progress of the pre-upgrade preparation processing by the MDU.

The transceiver 940 sends the upgrade file to the MDU after the at least one first feedback message indicates completion of the pre-upgrade preparation processing.

Optionally, in another embodiment, the transceiver 940 may be further configured to send a first reporting message to the NMS before sending the upgrade file to the multiple MDUs, where the first reporting message is used to indicate progress of pre-upgrade preparation processing by the multiple MDUs.

Optionally, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and the at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

Optionally, in another embodiment, the first message and the first feedback message are simple network management protocol SNMP messages.

Optionally, in another embodiment, the transceiver 940 may be further configured to: after sending the upgrade file to the multiple MDUs, receive an upgrade file loading progress message sent by each MDU in the multiple MDUs, where the loading progress message is used to indicate progress of loading the upgrade file of the MDU; send at least one second message to each MDU in the multiple MDUs after completion of loading the upgrade file of the MDU, where the at least one second message is used to instruct the MDU to perform processing that follows the upgrade file loading; and receive at least one second feedback message sent by the MDU, where the at least one second feedback message is used to indicate progress of the processing that follows the upgrade file loading by the MDU.

Optionally, in another embodiment, the transceiver 940 may be further configured to send a second reporting message to the NMS, where the second reporting message is used to indicate progress of processing that follows upgrade file loading by the multiple MDUs.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU; and the at least one second feedback message includes at least one of a software activation progress message or a post-upgrade check progress message, and the software activation progress message and the post-upgrade check progress message are respectively used to indicate progress of the software activation processing and progress of the post-upgrade check processing.

Optionally, in another embodiment, the loading progress message, the second message, and the second feedback message are SNMP messages.

Optionally, in another embodiment, the transceiver 940 may be further configured to: after receiving the indication message sent by the network management system NMS, send an upgrade start message to the multiple MDUs according to the indication message, where the upgrade start message is used to instruct the multiple MDUs to turn on upgrade switches, so that the multiple MDUs receive the upgrade file.

Optionally, in another embodiment, the processor 910 is further configured to obtain a function component before the transceiver 940 receives the indication message sent by the network management system NMS, where the function component is used by the OLT to load a function of interacting with the MDU, so as to upgrade the MDU.

FIG. 10 is a schematic block diagram of a multi-dwelling unit MDU according to another embodiment of the present invention. The MDU 1000 shown in FIG. 10 corresponds to the method shown in FIG. 3, and can implement each process in the method embodiment in FIG. 3. For specific functions of the MDU 1000, reference may be made to corresponding description in FIG. 3. To avoid repetition, detailed description is appropriately omitted herein.

Specifically, the MDU 1000 includes: a processor 1010, a memory 1020, a bus system 1030, and a transceiver 1040.

Specifically, the processor 1010 invokes, by using the bus system 1030, code stored in the memory 1020; controls the transceiver 1040 to receive at least one first message sent by an optical line terminal OLT, where the at least one first message is used by the MDU to perform pre-upgrade preparation processing; performs the pre-upgrade preparation processing according to the at least one first message, and sends at least one first feedback message to the OLT, where the at least one first feedback message is used to indicate progress of the pre-upgrade preparation processing by the MDU; and after the at least one first feedback message indicates completion of the pre-upgrade preparation processing, receives an upgrade file sent by the OLT, and performs upgrade according to the upgrade file.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

The method disclosed in the embodiment of the present invention may be applied to the processor 1010, or implemented by the processor 1010. The processor 1010 may be an integrated circuit chip with a signal processing capability. In an implementation process, the steps of the method may be implemented by using an integrated logical circuit of hardware in the processor 1010, or by using a software instruction. The processor 1010 may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or other programmable logical devices, a discrete gate or transistor logical device, or a discrete hardware assembly. The processor may implement or execute methods, steps and logical block diagrams disclosed in the embodiments of the present invention. The general purpose processor may be a microprocessor, or the processor may also be any conventional processor or the like. The steps of the methods disclosed with reference to the embodiments of the present invention may be directly implemented by a hardware decoding processor, or may be implemented by a combination of hardware and a software module in a decoding processor. The software module may be located in a storage medium that is mature in the art, such as a random access memory (Random Access Memory, RAM), a flash memory, a read-only memory (Read-Only Memory, ROM), a programmable read-only memory, or an electrically erasable programmable memory, or a register. The storage medium is located in the memory 1020, and the processor 1010 reads information in the memory 1020 and implements, in combination with its hardware, the steps of the foregoing methods. The bus system 1030 may include not only a data bus but also a power supply bus, a control bus, a status signal bus and the like. However, for clarity, various types of buses in the figure are marked as the bus system 1030.

Optionally, in another embodiment, the at least one first message includes at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and the at least one first feedback message includes at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

Optionally, in another embodiment, the first message and the first feedback message are simple network management protocol SNMP messages.

Optionally, in another embodiment, the transceiver 1040 may be further configured to: after receiving the upgrade file sent by the OLT, send an upgrade file loading progress message to the OLT, where the loading progress message is used by the OLT to determine progress of loading the upgrade file of the MDU;
after completion of loading the upgrade file of the MDU, receive at least one second message sent by the OLT, where the at least one second message is used by the MDU to perform processing that follows the upgrade file loading; and
according to the at least one second message, perform the processing that follows the upgrade file loading, and send at least one second feedback message to the OLT, where the at least one second feedback message is used to indicate progress of the processing that follows the upgrade file loading by the MDU.

Optionally, in another embodiment, the at least one second message includes at least one of a software activation indication message or a post-upgrade check indication message, and the software activation indication message and the post-upgrade check indication message are respectively used to instruct the MDU to perform software activation processing and post-upgrade check processing that follow the upgrade file loading by the MDU.

The at least one second feedback message includes at least one of a software activation progress message or a post-upgrade check progress message, and the software activation progress message and the post-upgrade check progress message are respectively used to indicate progress of the software activation processing and progress of the post-upgrade check processing.

Optionally, in another embodiment, the loading progress message, the second message, and the second feedback message are SNMP messages.

Optionally, in another embodiment, the transceiver 1040 may be further configured to: before the first receiving unit receives the first message sent by the optical line terminal OLT, receive an upgrade start message sent by the OLT; and the controller 1010 is further configured to turn on an upgrade switch according to the upgrade start message, so as to receive the upgrade file.

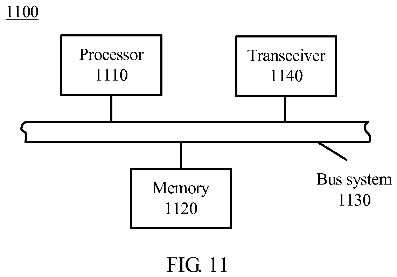

FIG. 11 is a schematic block diagram of a network management system NMS according to an embodiment of the present invention. The NMS 1100 shown in FIG. 11 corresponds to the method shown in FIG. 4, and can implement each process in the method embodiment in FIG. 4. For specific functions of the NMS 1100, reference may be made to corresponding description in FIG. 4. To avoid repetition, detailed description is appropriately omitted herein.

Specifically, the NMS 1100 includes: a processor 1110, a memory 1120, a bus system 1130, and a transceiver 1140.

Specifically, the processor 1110 invokes, by using the bus system 1130, code stored in the memory 1120; and generates an indication message according to a task of upgrading multiple MDUs, where the indication message indicates the task of upgrading the multiple MDUs; and the transceiver 1140 sends the indication message to an optical line terminal OLT, so that the OLT upgrades the multiple MDUs according to the indication message.

Therefore, in this embodiment of the present invention, an NMS instructs an OLT to send an upgrade file to multiple MDUs, so that the multiple MDUs perform upgrade according to the upgrade file provided by the OLT. In this embodiment of the present invention, the multiple MDUs are upgraded by the OLT instead of the existing NMS, which can enhance concurrency of upgrading MDUs, shorten a time of upgrading multiple MDUs, and improve performance of upgrading MDUs.

The method disclosed in the embodiment of the present invention may be applied to the processor 1110, or implemented by the processor 1110. The processor 1110 may be an integrated circuit chip with a signal processing capability. In an implementation process, the steps of the method may be implemented by using an integrated logical circuit of hardware in the processor 1110, or by using a software instruction. The processor 1110 may be a general purpose processor, a digital signal processor (Digital Signal Processor, DSP), an application-specific integrated circuit (Application-Specific Integrated Circuit, ASIC), a field programmable gate array (Field Programmable Gate Array, FPGA) or other programmable logical devices, a discrete gate or transistor logical device, or a discrete hardware assembly. The processor may implement or execute methods, steps and logical block diagrams disclosed in the embodiments of the present invention. The general purpose processor may be a microprocessor, or the processor may also be any conventional processor or the like. The steps of the methods disclosed with reference to the embodiments of the present invention may be directly implemented by a hardware decoding processor, or may be implemented by a combination of hardware and a software module in a decoding processor. The software module may be located in a storage medium that is mature in the art, such as a random access memory (Random Access Memory, RAM), a flash memory, a read-only memory (Read-Only Memory, ROM), a programmable read-only memory, or an electrically erasable programmable memory, or a register. The storage medium is located in the memory 1120, and the processor 1110 reads information in the memory 1120 and implements, in combination with its hardware, the steps of the foregoing methods. The bus system 1130 may include not only a data bus but also a power supply bus, a control bus, a status signal bus and the like. However, for clarity, various types of buses in the figure are marked as the bus system 1130.

Optionally, in another embodiment, the transceiver 1140 may be further configured to: after sending the indication message to the optical line terminal OLT, receive a first reporting message sent by the OLT, where the first reporting message is used by the NMS to determine progress of pre-upgrade preparation processing by the multiple MDUs.

Optionally, in another embodiment, the transceiver 1140 may be further configured to: after sending the indication message to the optical line terminal OLT, receive a second reporting message sent by the OLT, where the second reporting message is used to indicate progress of processing that follows upgrade file loading by the multiple MDUs.

Optionally, in another embodiment, the transceiver 1140 may be further configured to: before sending the indication message to the optical line terminal OLT, create a function component and send the function component to the OLT, where the function component is used by the OLT to load a function of interacting with the multiple MDUs, so as to upgrade the multiple MDUs.

It should be understood that "an embodiment" or "the embodiment" mentioned throughout the specification means that specific characteristics, structures or features related to the embodiment are included in at least one embodiment of the present invention. Therefore, "in another embodiment" or "in the embodiment" that appears throughout the specification unnecessarily refers to the same embodiment. In addition, such specific characteristics, structures or features may be combined in one or more embodiments in any appropriate manner. It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that in the embodiments of the present invention, "B corresponding to A" indicates that B is associated with A, and B may be determined according to A. However, it should further be understood that determining A according to B does not mean that B is determined according to A only; that is, B may also be determined according to A and/or other information.

A person of ordinary skill in the art may be aware that, in combination with the examples described in the embodiments disclosed in this specification, units and algorithm steps may be implemented by electronic hardware, computer software, or a combination thereof To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Apart or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

## Claims

1. A method for upgrading a multi-dwelling unit, MDU, comprising:
receiving (210), by an optical line terminal, OLT, an indication message sent by a network management system, NMS, wherein the indication message indicates a task of upgrading multiple MDUs;
sending (220), by the OLT, at least one first message to each MDU in the multiple MDUs according to the indication message, wherein the at least one first message is used to instruct the MDU to perform pre-upgrade preparation processing; and
sending (230), by the OLT, an upgrade file to the multiple MDUs, so that the multiple MDUs perform upgrade according to the upgrade file;
wherein before the receiving, by an optical line terminal OLT, an indication message sent by a network management system NMS, the method further comprises:
obtaining, by the OLT, a function component, wherein the function component is an upgrade management function used by the OLT to upgrade the MDUs, wherein the function component is dynamically loaded by the OLT to perform upgrade of the MDUs.

2. The method according to claim 1, further comprising:
receiving, by the OLT, at least one first feedback message sent by the MDU, wherein the at least one first feedback message is used to indicate progress of the pre-upgrade preparation processing by the MDU, wherein
the sending, by the OLT, an upgrade file to the multiple MDUs comprises:
sending, by the OLT, the upgrade file to the MDU after the at least one first feedback message indicates completion of the pre-upgrade preparation processing.

3. The method according to claim 2, wherein before the sending, by the OLT, an upgrade file to the multiple MDUs, the method further comprises:
sending, by the OLT, a first reporting message to the NMS, wherein the first reporting message is used to indicate progress of pre-upgrade preparation processing by the multiple MDUs.

4. The method according to claim 2 or 3, wherein
the at least one first message comprises at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and
the at least one first feedback message comprises at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

5. A method for upgrading a multi-dwelling unit, MDU, comprising:
generating (410), by a network management system, NMS, an indication message according to a task of upgrading multiple MDUs, wherein the indication message indicates the task of upgrading the multiple MDUs; and
sending (420), by the NMS, the indication message to an optical line terminal, OLT, so that the OLT upgrades the multiple MDUs according to the indication message;
wherein before the sending, by the NMS, the indication message to an optical line terminal OLT, the method further comprises:
creating, by the NMS, a function component and sending the function component to the OLT, wherein the function component is an upgrade management function used by the OLT to upgrade the MDUs, wherein the function component is dynamically loaded by the OLT to perform upgrade of the MDUs.

6. The method according to claim 5, wherein after the sending, by the NMS, the indication message to an optical line terminal, OLT, the method further comprises:
receiving, by the NMS, a first reporting message sent by the OLT, wherein the first reporting message is used by the NMS to determine progress of pre-upgrade preparation processing by the multiple MDUs.

7. The method according to claim 5 or 6, wherein after the sending, by the NMS, the indication message to an optical line terminal, OLT, the method further comprises:
receiving, by the NMS, a second reporting message sent by the OLT, wherein the second reporting message is used to indicate progress of processing that follows upgrade file loading by the multiple MDUs.

8. An optical line terminal, OLT, comprising:
a first receiving unit (610), configured to receive an indication message sent by a network management system, NMS, wherein the indication message indicates a task of upgrading multiple MDUs;
a first sending unit (620), configured to send at least one first message to each MDU in the multiple MDUs according to the indication message, wherein the at least one first message is used to instruct the MDU to perform pre-upgrade preparation processing; and
a second sending unit (630), configured to send an upgrade file to the multiple MDUs, so that the multiple MDUs perform upgrade according to the upgrade file;
wherein the OLT further comprises:
an obtaining unit, configured to obtain a function component before the first receiving unit receives the indication message sent by the network management system NMS, wherein the function component is an upgrade management function used by the OLT to upgrade the MDUs, wherein the function component is dynamically loaded by the OLT to perform upgrade of the MDUs.

9. The OLT according to claim 8, further comprising:
a second receiving unit, configured to receive at least one first feedback message sent by the MDU, wherein the at least one first feedback message is used to indicate progress of the pre-upgrade preparation processing by the MDU, wherein
the second sending unit sends the upgrade file to the MDU after the at least one first feedback message indicates completion of the pre-upgrade preparation processing.

10. The OLT according to claim 8, wherein the OLT further comprises:
a third sending unit, configured to send a first reporting message to the NMS before the second sending unit sends the upgrade file to the multiple MDUs, wherein the first reporting message is used to indicate progress of pre-upgrade preparation processing by the multiple MDUs.

11. The OLT according to claim 9 or 10, wherein
the at least one first message comprises at least one of a pre-upgrade check indication message, a device configuration saving indication message, or a configuration backup indication message, and the pre-upgrade check indication message, the device configuration saving indication message, and the configuration backup indication message are respectively used to instruct the MDU to perform a pre-upgrade check, save a device configuration, and back up a configuration; and
the at least one first feedback message comprises at least one of a pre-upgrade check progress message, a device configuration saving progress message, or a configuration backup progress message, and the pre-upgrade check progress message, the device configuration saving progress message, and the configuration backup progress message are respectively used to indicate progress of the pre-upgrade check, progress of saving the device configuration, and progress of backing up the configuration.

12. A network management system, NMS, comprising:
a generation unit (810), configured to generate an indication message according to a task of upgrading multiple MDUs, wherein the indication message indicates the task of upgrading the multiple MDUs; and
a first sending unit (820), configured to send the indication message to an optical line terminal, OLT, so that the OLT upgrades the multiple MDUs according to the indication message;
wherein the NMS further comprises:
a second sending unit, configured to: before the first sending unit sends the indication message to the optical line terminal, OLT, create a function component and send the function component to the OLT, wherein the function component is an upgrade management function used by the OLT to upgrade the MDUs, wherein the function component is dynamically loaded by the OLT to perform upgrade of the MDUs.

13. The NMS according to claim 12, wherein the NMS further comprises:
a first receiving unit, configured to: after the first sending unit sends the indication message to the optical line terminal, OLT, receive a first reporting message sent by the OLT, wherein the first reporting message is used by the NMS to determine progress of pre-upgrade preparation processing by the multiple MDUs.

14. The NMS according to claim 12 or 13, wherein the NMS further comprises:
a second receiving unit, configured to: after the first sending unit sends the indication message to the optical line terminal, OLT, receive a second reporting message sent by the OLT, wherein the second reporting message is used to indicate progress of processing that follows upgrade file loading by the multiple MDUs.

## Patentansprüche

1. Verfahren zum Aktualisieren einer "Multi-Dwelling Unit" (MDU), die Folgendes umfasst:
Empfangen (210), durch ein optisches Leitungsendgerät (OLT), einer von einem Netzwerkverwaltungssystem (NMS) gesendeten Angabenachricht, wobei die Angabenachricht eine Aufgabe des Aktualisierens mehrerer MDUs angibt;
Senden (220), durch das OLT, von mindestens einer ersten Nachricht an jede MDU in den mehreren MDUs gemäß der Angabenachricht, wobei die mindestens eine erste Nachricht verwendet wird, die MDU anzuweisen, eine Vorbereitungsverarbeitung vor dem Upgrade durchzuführen; und
Senden (230), durch das OLT, einer Upgrade-Datei an die mehreren MDUs, so dass die mehreren MDUs ein Upgrade gemäß der Upgrade-Datei durchführen;
wobei vor dem Empfangen, durch ein optisches Leitungsendgerät (OLT), einer von einem Netzwerkverwaltungssystem (NMS) gesendeten Angabenachricht, das Verfahren ferner Folgendes umfasst:
Erhalten, durch das OLT, einer Funktionskomponente, wobei die Funktionskomponente eine Upgrade-Verwaltungsfunktion ist, die von dem OLT verwendet wird, um die MDUs zu aktualisieren, wobei die Funktionskomponente durch das OLT dynamisch geladen wird, um ein Upgrade der MDUs durchzuführen.

2. Verfahren gemäß Anspruch 1, das ferner Folgendes umfasst:
Empfangen, durch das OLT, von mindestens einer von der MDU gesendeten ersten Rückmeldungsnachricht, wobei die mindestens eine erste Rückmeldungsnachricht verwendet wird, um den Fortschritt der Vorbereitungsverarbeitung vor dem Upgrade durch die MDU anzugeben, wobei
das Senden, durch das OLT, einer Upgrade-Datei zu den mehreren MDUs Folgendes umfasst:
Senden, durch das OLT, der Upgrade-Datei zu der MDU, nachdem mindestens eine erste Rückmeldungsnachricht den Abschluss der Vorbereitungsverarbeitung vor dem Upgrade angegeben hat.

3. Verfahren gemäß Anspruch 2, wobei vor dem Senden, durch das OLT, einer Upgrade-Datei zu den mehreren MDUs, das Verfahren ferner Folgendes umfasst: Senden, durch das OLT, einer ersten Berichtsnachricht an das NMS, wobei die erste Berichtsnachricht verwendet wird, um den Fortschritt der Vorbereitungsverarbeitung vor dem Upgrade durch die mehreren MDUs anzugeben.

4. Verfahren gemäß Anspruch 2 oder 3, wobei
die mindestens eine erste Nachricht mindestens eine einer Prüfungsangabenachricht vor dem Upgrade, einer Gerätekonfigurationsspeicherungs-Angabenachricht, oder einer Konfigurationssicherungs-Angabenachricht umfasst, und die Prüfungsangabenachricht vor dem Upgrade, die Gerätekonfigurationsspeicherungs-Angabenachricht, oder die Konfigurationssicherungs-Angabenachricht jeweils verwendet werden, um die MDU anzuweisen, eine Prüfung vor dem Upgrade durchzuführen, eine Gerätekonfiguration zu speichern und eine Konfiguration zu sichern; und
die mindestens eine erste Rückmeldungsnachricht mindestens eine einer Prüfungsfortschrittsnachricht vor dem Upgrade, einer Gerätekonfigurationsspeicherungs-Fortschrittsnachricht, oder einer Konfigurationssicherungs-Fortschrittsnachricht umfasst, und die Prüfungsfortschrittsnachricht vor dem Upgrade, die Gerätekonfigurationsspeicherungs-Fortschrittsnachricht, oder die Konfigurationssicherungs-Fortschrittsnachricht jeweils verwendet werden, um den Fortschritt der Prüfung vor dem Upgrade, den Fortschritt der Speicherung der Gerätekonfiguration und den Fortschritt der Sicherung der Konfiguration anzugeben.

5. Verfahren zum Aktualisieren einer "Multi-Dwelling Unit" (MDU), das Folgendes umfasst:
Erzeugen (410), durch ein Netzwerkverwaltungssystem (NMS), einer Angabenachricht gemäß einer Aufgabe des Aktualisierens mehrerer MDUs, wobei die Angabenachricht die Aufgabe des Aktualisierens der mehreren MDUs angibt; und
Senden (420), durch das NMS, der Angabenachricht zu einem optischen Leitungsendgerät (OLT), so dass das OLT die mehreren MDUs gemäß der Angabenachricht aktualisiert;
wobei vor dem Senden, durch das NMS, der Angabenachricht zu einem optischen Leitungsendgerät (OLT), das Verfahren ferner Folgendes umfasst:
Erzeugen, durch das NMS, einer Funktionskomponente, und Senden der Funktionskomponente zu dem OLT, wobei die Funktionskomponente eine Upgrade-Verwaltungsfunktion ist, die von dem OLT verwendet wird, um die MDUs zu aktualisieren, wobei die Funktionskomponente durch das OLT dynamisch geladen wird, um ein Upgrade der MDUs durchzuführen.

6. Verfahren gemäß Anspruch 5, wobei nach dem Senden, durch das NMS, der Angabenachricht zu einem optischen Leitungsendgerät (OLT), das Verfahren ferner Folgendes umfasst:
Empfangen, durch das NMS, einer ersten von dem OLT gesendeten Berichtsnachricht, wobei die erste Berichtsnachricht von dem NMS verwendet wird, um den Fortschritt der Vorbereitungsverarbeitung vor dem Upgrade durch die mehreren MDUs zu ermitteln.

7. Verfahren gemäß Anspruch 5 oder 6, wobei nach dem Senden, durch das NMS, der Angabenachricht zu einem optischen Leitungsendgerät (OLT), das Verfahren ferner Folgendes umfasst:
Empfangen, durch das NMS, einer zweiten von dem OLT gesendeten Berichtsnachricht, wobei die zweite Berichtsnachricht verwendet wird, um den Fortschritt der Verarbeitung anzugeben, die dem Laden der Upgrade-Datei durch die mehreren MDUs folgt.

8. Optisches Leitungsendgerät (OLT), das Folgendes umfasst:
eine erste Empfangseinheit (610), die dazu ausgelegt ist, eine von einem Netzwerkverwaltungssystem (NMS) gesendete Angabenachricht zu empfangen, wobei die Angabenachricht eine Aufgabe des Aktualisierens mehrerer MDUs angibt;
eine erste Sendeeinheit (620), die dazu ausgelegt ist, mindestens eine erste Nachricht an jede MDU in den mehreren MDUs gemäß der Angabenachricht zu senden, wobei die mindestens eine erste Nachricht verwendet wird, um die MDU anzuweisen, eine Vorbereitungsverarbeitung vor dem Upgrade durchzuführen; und
eine zweite Sendeeinheit (630), die dazu ausgelegt ist, eine Upgrade-Datei an die mehreren MDUs zu senden, so dass die mehreren MDUs ein Upgrade gemäß der Upgrade-Datei durchführen;
wobei das OLT ferner Folgendes umfasst:
eine Erhaltungseinheit, die dazu ausgelegt ist, eine Funktionskomponente zu erhalten, bevor die erste Empfangseinheit die von dem Netzwerkverwaltungssystem (NMS) gesendete Angabenachricht empfängt, wobei die Funktionskomponente eine Upgrade-Verwaltungsfunktion ist, die von dem OLT verwendet wird, um die MDUs zu aktualisieren, wobei die Funktionskomponente durch das OLT dynamisch geladen wird, um ein Upgrade der MDUs durchzuführen.

9. OLT gemäß Anspruch 8, das ferner Folgendes umfasst:
eine zweite Empfangseinheit, die dazu ausgelegt ist, mindestens eine von der MDU gesendete erste Rückmeldungsnachricht zu empfangen, wobei die mindestens eine erste Rückmeldungsnachricht verwendet wird, um den Fortschritt der Vorbereitungsverarbeitung vor dem Upgrade durch die MDU anzugeben, wobei die zweite Sendeeinheit die Upgrade-Datei zu der MDU sendet, nachdem die mindestens eine erste Rückmeldungsnachricht den Abschluss der Vorbereitungsverarbeitung vor dem Upgrade angegeben hat.

10. OLT gemäß Anspruch 8, wobei das OLT ferner Folgendes umfasst:
eine dritte Sendeeinheit, die dazu ausgelegt ist, eine erste Berichtsnachricht an das NMS zu senden, bevor die zweite Sendeeinheit die Upgrade-Datei zu den mehreren MDUs sendet, wobei die erste Berichtsnachricht verwendet wird, um den Fortschritt der Vorbereitungsverarbeitung vor dem Upgrade durch die mehreren MDUs anzugeben.

11. OLT gemäß Anspruch 9 oder 10, wobei
die mindestens eine erste Nachricht mindestens eine einer Prüfungsangabenachricht vor dem Upgrade, einer Gerätekonfigurationsspeicherungs-Angabenachricht, oder einer Konfigurationssicherungs-Angabenachricht umfasst, und die Prüfungsangabenachricht vor dem Upgrade, die Gerätekonfigurationsspeicherungs-Angabenachricht, oder die Konfigurationssicherungs-Angabenachricht jeweils verwendet werden, um die MDU anzuweisen, eine Prüfung vor dem Upgrade durchzuführen, eine Gerätekonfiguration zu speichern und eine Konfiguration zu sichern; und
die mindestens eine erste Rückmeldungsnachricht mindestens eine einer Prüfungsfortschrittsnachricht vor dem Upgrade, einer Gerätekonfigurationsspeicherungs-Fortschrittsnachricht, oder einer Konfigurationssicherungs-Fortschrittsnachricht umfasst, und die Prüfungsfortschrittsnachricht vor dem Upgrade, die Gerätekonfigurationsspeicherungs-Fortschrittsnachricht, oder die Konfigurationssicherungs-Fortschrittsnachricht jeweils verwendet werden, um den Fortschritt der Prüfung vor dem Upgrade, den Fortschritt der Speicherung der Gerätekonfiguration und den Fortschritt der Sicherung der Konfiguration anzugeben.

12. Netzwerkverwaltungssystem (NMS), das Folgendes umfasst:
eine Erzeugungseinheit (810), die dazu ausgelegt ist, eine Angabenachricht gemäß einer Aufgabe des Aktualisierens mehrerer MDUs zu erzeugen, wobei die Angabenachricht die Aufgabe des Aktualisierens der mehreren MDUs angibt; und
eine erste Sendeeinheit (820), die dazu ausgelegt ist, die Angabenachricht zu einem optischen Leitungsendgerät (OLT) zu senden, so dass das OLT die mehreren MDUs gemäß der Angabenachricht aktualisiert;
wobei das NMS ferner Folgendes umfasst:
eine zweite Sendeeinheit, die für Folgendes ausgelegt ist: bevor die erste Sendeeinheit die Angabenachricht an das optische Leitungsendgerät (OLT) sendet,
eine Funktionskomponente zu erzeugen und die Funktionskomponente zu dem OLT zu senden, wobei die Funktionskomponente eine Upgrade-Verwaltungsfunktion ist, die von dem OLT verwendet wird, um die MDUs zu aktualisieren, wobei die Funktionskomponente durch das OLT dynamisch geladen wird, um ein Upgrade der MDUs durchzuführen.

13. NMS gemäß Anspruch 12, wobei das NMS ferner Folgendes umfasst:
eine erste Empfangseinheit, die für Folgendes ausgelegt ist: nachdem die erste Sendeeinheit die Angabenachricht an das optische Leitungsendgerät (OLT) gesendet hat, eine von dem OLT gesendete erste Berichtsnachricht zu empfangen, wobei die erste Berichtsnachricht von dem NMS verwendet wird, um den Fortschritt der Vorbereitungsverarbeitung vor dem Upgrade durch die mehreren MDUs zu ermitteln.

14. NMS gemäß Anspruch 12 oder 13, wobei das NMS ferner Folgendes umfasst:
eine zweite Empfangseinheit, die für Folgendes ausgelegt ist: nachdem die erste Sendeeinheit die Angabenachricht an das optische Leitungsendgerät (OLT) gesendet hat, eine von dem OLT gesendete zweite Berichtsnachricht zu empfangen, wobei die zweite Berichtsnachricht verwendet wird, um den Fortschritt der Vorbereitungsverarbeitung zu ermitteln, die dem Laden der Upgrade-Datei durch die mehreren MDUs folgt.

## Revendications

1. Procédé de mise à niveau d'une unité à logements multiples, MDU, comprenant :
la réception (210), par un terminal de ligne optique, OLT, d'un message d'indication envoyé par un système de gestion de réseau, NMS, le message d'indication indiquant une tâche de mise à niveau de multiples MDU ;
l'envoi (220), par l'OLT, d'au moins un premier message à chaque MDU dans les multiples MDU en fonction du message d'indication, l'au moins un premier message étant utilisé pour ordonner à la MDU d'effectuer un traitement de préparation avant mise à niveau ; et
l'envoi (230), par l'OLT, d'un fichier de mise à niveau aux multiples MDU, de sorte que les multiples MDU effectuent la mise à niveau en fonction du fichier de mise à niveau ;
avant la réception, par un terminal de ligne optique OLT, d'un message d'indication envoyé par un système de gestion de réseau NMS, le procédé comprenant en outre :
l'obtention, par l'OLT, d'un composant fonctionnel, le composant fonctionnel étant une fonction de gestion de mise à niveau utilisée par l'OLT pour mettre à niveau les MDU, le composant fonctionnel étant chargé dynamiquement par l'OLT pour effectuer la mise à niveau des MDU.

2. Procédé selon la revendication 1, comprenant en outre :
la réception, par l'OLT, d'au moins un premier message de rétroaction envoyé par la MDU, l'au moins un premier message de rétroaction étant utilisé pour indiquer la progression du traitement de préparation avant mise à niveau par la MDU, l'envoi, par l'OLT, d'un fichier de mise à niveau aux multiples MDU comprenant :
l'envoi, par l'OLT, du fichier de mise à niveau au MDU après que l'au moins un premier message de rétroaction indique l'achèvement du traitement de préparation avant mise à niveau.

3. Procédé selon la revendication 2, avant l'envoi, par l'OLT, d'un fichier de mise à niveau aux multiples MDU, le procédé comprenant en outre :
l'envoi, par l'OLT, d'un premier message de rapport au NMS, le premier message de rapport étant utilisé pour indiquer la progression du traitement de préparation avant mise à niveau par les multiples MDU.

4. Procédé selon la revendication 2 ou 3,
l'au moins un premier message comprenant au moins un message parmi un message d'indication de vérification avant mise à niveau, un message d'indication de sauvegarde de configuration de dispositif ou un message d'indication de sauvegarde de configuration, et le message d'indication de vérification avant mise à niveau, le message d'indication de sauvegarde de configuration de dispositif et le message d'indication de sauvegarde de configuration étant respectivement utilisés pour ordonner au MDU d'effectuer une vérification avant mise à niveau, sauvegarder une configuration de dispositif et sauvegarder une configuration ; et
l'au moins un premier message de rétroaction comprenant au moins l'un d'un message de progression de vérification avant mise à niveau, d'un message de progression de sauvegarde de configuration de dispositif ou d'un message de progression de sauvegarde de configuration, et le message de progression de vérification avant mise à niveau, le message de progression de sauvegarde de configuration de dispositif et le message de progression de sauvegarde de configuration étant respectivement utilisés pour indiquer la progression de la vérification avant mise à niveau, la progression de la sauvegarde de la configuration du dispositif et la progression de la sauvegarde de la configuration de fonctionnement.

5. Procédé de mise à niveau d'une unité à logements multiples, MDU, comprenant :
la génération (410), par un système de gestion de réseau, NMS, d'un message d'indication en fonction d'une tâche de mise à niveau de multiples MDU, le message d'indication indiquant la tâche de mise à niveau des multiples MDU ; et
l'envoi (420), par le NMS, du message d'indication à un terminal de ligne optique, OLT, de sorte que l'OLT met à niveau les multiples MDU en fonction du message d'indication,
avant l'envoi, par le NMS, du message d'indication à un terminal de ligne optique OLT, le procédé comprenant en outre :
la création, par le NMS, d'un composant fonctionnel et l'envoi du composant fonctionnel à l'OLT, le composant fonctionnel étant une fonction de gestion de mise à niveau utilisée par l'OLT pour mettre à niveau les MDU, le composant fonctionnel étant chargé dynamiquement par l'OLT pour effectuer la mise à niveau des MDU.

6. Procédé selon la revendication 5, après l'envoi, par le NMS, du message d'indication à un terminal de ligne optique, OLT, le procédé comprenant en outre :
la réception, par le NMS, d'un premier message de rapport envoyé par l'OLT, le NMS utilisant le premier message de rapport pour déterminer la progression du traitement de préparation avant mise à niveau par les multiples MDU.

7. Procédé selon la revendication 5 ou 6, après l'envoi, par le NMS, du message d'indication à un terminal de ligne optique, OLT, le procédé comprenant en outre :
la réception, par le NMS, d'un deuxième message de rapport envoyé par l'OLT, le deuxième message de rapport étant utilisé pour indiquer la progression du traitement qui suit le chargement du fichier de mise à niveau par les multiples MDU.

8. Terminal de ligne optique, OLT, comprenant :
une première unité de réception (610), configurée pour recevoir un message d'indication envoyé par un système de gestion de réseau, NMS, le message d'indication indiquant une tâche de mise à niveau de multiples MDU ;
une première unité d'envoi (620), configurée pour envoyer au moins un premier message à chaque MDU dans les multiples MDU en fonction du message d'indication, l'au moins un premier message étant utilisé pour ordonner à la MDU d'effectuer un traitement de préparation avant mise à niveau ; et
une deuxième unité d'envoi (630), configurée pour envoyer un fichier de mise à niveau aux multiples MDU, de sorte que les multiples MDU effectuent la mise à niveau en fonction du fichier de mise à niveau ;
l'OLT comprenant en outre :
une unité d'obtention, configurée pour obtenir un composant fonctionnel avant que la première unité de réception ne reçoive le message d'indication envoyé par le système de gestion de réseau NMS, le composant fonctionnel étant une fonction de gestion de mise à niveau utilisée par l'OLT pour mettre à niveau les MDU, le composant fonctionnel étant chargé dynamiquement par l'OLT pour effectuer la mise à niveau des MDU.

9. OLT selon la revendication 8, comprenant en outre :
une deuxième unité de réception, configurée pour recevoir au moins un premier message de rétroaction envoyé par le MDU, l'au moins un premier message de rétroaction étant utilisé pour indiquer la progression du traitement de préparation avant mise à niveau par le MDU,
la deuxième unité d'envoi envoyant le fichier de mise à niveau au MDU après que l'au moins un premier message de rétroaction indique la fin du traitement de préparation avant mise à niveau.

10. OLT selon la revendication 8, l'OLT comprenant en outre :
une troisième unité d'envoi, configurée pour envoyer un premier message de rapport au NMS avant que la deuxième unité d'envoi n'envoie le fichier de mise à niveau aux multiples MDU, le premier message de rapport étant utilisé pour indiquer la progression du traitement de préparation avant mise à niveau par les multiples MDU.

11. OLT selon la revendication 9 ou 10,
l'au moins un premier message comprenant au moins un message parmi un message d'indication de vérification avant mise à niveau, un message d'indication de sauvegarde de configuration de dispositif ou un message d'indication de sauvegarde de configuration, et le message d'indication de vérification avant mise à niveau, le message d'indication de sauvegarde de configuration de dispositif et le message d'indication de sauvegarde de configuration étant respectivement utilisés pour ordonner au MDU d'effectuer une vérification avant mise à niveau, sauvegarder une configuration de dispositif et sauvegarder une configuration ; et
l'au moins un premier message de rétroaction comprenant au moins l'un d'un message de progression de vérification avant mise à niveau, d'un message de progression de sauvegarde de configuration de dispositif ou d'un message de progression de sauvegarde de configuration, et le message de progression de vérification avant mise à niveau, le message de progression de sauvegarde de configuration de dispositif et le message de progression de sauvegarde de configuration étant respectivement utilisés pour indiquer la progression de la vérification avant mise à niveau, la progression de la sauvegarde de la configuration du dispositif et la progression de la sauvegarde de la configuration de fonctionnement.

12. Système de gestion de réseau, NMS, comprenant :
une unité de génération (810), configurée pour générer un message d'indication en fonction d'une tâche de mise à niveau de multiples MDU, le message d'indication indiquant la tâche de mise à niveau des multiples MDU ; et
une première unité d'envoi (820), configurée pour envoyer le message d'indication à un terminal de ligne optique, OLT, de sorte que l'OLT met à niveau les multiples MDU en fonction du message d'indication ;
le NMS comprenant en outre :
une deuxième unité d'envoi, configurée pour : avant que la première unité d'envoi n'envoie le message d'indication au terminal de ligne optique, OLT, créer un composant fonctionnel et envoyer le composant fonctionnel à l'OLT, le composant fonctionnel étant une fonction de gestion de mise à niveau utilisée par l'OLT pour mettre à niveau les MDU, le composant fonctionnel étant chargé dynamiquement par l'OLT pour effectuer la mise à niveau des MDU.

13. NMS selon la revendication 12, le NMS comprenant en outre :
une première unité de réception, configurée pour :
après que la première unité émettrice a envoyé le message d'indication au terminal de ligne optique, l'OLT, recevoir un premier message de compte rendu envoyé par l'OLT, le premier message de compte rendu étant utilisé par le NMS pour déterminer la progression du traitement de préparation avant mise à niveau par les multiples MDU.

14. NMS selon la revendication 12 ou 13, le NMS comprenant en outre :
une deuxième unité de réception, configurée pour : après que la première unité émettrice envoie le message d'indication au terminal de ligne optique, OLT, recevoir un deuxième message de rapport envoyé par l'OLT, le deuxième message de rapport étant utilisé pour indiquer la progression du traitement qui suit le chargement du fichier de mise à niveau par les multiples MDU.
